# EUROPEAN PATENT APPLICATION

(11) **EP 4 813 819 A1**
(43) Date of publication of application: **30.09.2026**
(21) Application number: 26167962.5
(22) Date of filing: 26.03.2026
(51) Int. Cl.: B62D 35/00, B62D 25/12

(54) **CAR WITH INCREASED AERODYNAMIC LOAD**

(30) Priority: 27.03.2025 IT 202500006432
(71) Applicant: FERRARI S.p.A., 41100 Modena (IT)
(72) Inventor: SEDDA, Salvatore, 41100 Modena (IT); BAGNARDI, Giuseppe, 41100 Modena (IT); BIANCALANA, Matteo, 41100 Modena (IT); DE FABIIS, Stefano, 41100 Modena (IT); MANZONI, Flavio, 41100 Modena (IT); PALAZZANI, Carlo, 41100 Modena (IT)
(74) Representative: Studio Torta S.p.A.

(57) **Abstract**

A car (1) having two front wheels (2); two rear wheels (3); a body (4); at least one radiator (18) configured to be crossed by an air flow so as to transfer heat; at least one cooling duct (19), which contains the radiator (18) on the inside and extends between an inlet opening (20), which is obtained through the body (4), and an outlet opening (21), which is obtained through the body (4); and at least one lateral aerodynamic appendage (22) provided with an airfoil (23), which is located higher than the inlet opening (20) of the cooling duct (19), is shaped so as to generate a downforce, is oriented horizontally and is arranged at a given distance from the rest of the body (4) so that the air can also flow under the airfoil (23). The cooling duct (19) at least partly extends under the airfoil (23).

## Description

### CROSS-REFERENCE TO RELATED APPLICATIONS

This patent application claims priority from Italian patent application no. 102025000006432 filed on March 27, 2025, the entire disclosure of which is incorporated herein by reference.

### FIELD OF THE ART

The present invention relates to a car with increased aerodynamic load.

### PRIOR ART

In high-performance cars, aerodynamics is designed to generate a high aerodynamic load, namely an aerodynamic downforce directed downwards, while at the same time trying to minimise aerodynamic drag. Consequently, the aerodynamic efficiency of a car is assessed as a function of the ratio of downforce to the corresponding aerodynamic drag: the higher this ratio, the greater the aerodynamic efficiency of the car.

A solution adopted mainly in racing cars in order to increase the front aerodynamic load, namely the force generated by the aerodynamic effect and weighing on the front wheels, involves the use of openings with ventilation slats called *"louvers",* made on the wings, or in any case near the front wheel arches. These *"louvered"* openings are configured to generate an upward movement of the airflow as the car travels, thus depending on speed, flowing from inside the wheel well onto the car body. This effect reduces the existing pressure level in the wheelhouse, which is an obstacle to aerodynamic load generation and an aggravation to drag. Depending on the embodiment of the openings, however, sometimes in high-performance cars that are type-approved for normal road use it is not always possible to use this type of solution, as it has to comply with all the safety requirements set out in the type-approval regulations.

A solution adopted in high-performance cars in order to increase the rear downforce, namely the force generated by aerodynamic effect and weighing on the rear wheels, involves the use of an aerodynamic appendage which is generally arranged behind the rear wheels and comprises at least one horizontally oriented airfoil shaped to generate downforce. Both a solution in which there is a single airfoil extending transversely across the entire width of the car and a solution in which there are two separate and distinct airfoils arranged at a certain distance from each other on opposite sides of the car are known.

Patent application WO2013186130A1 describes an airflow control system for controlling heat transfer in a car; the airflow control system comprises an inlet, an outlet, a heat transfer chamber in fluid communication with the inlet and outlet, and a flow control element arranged near the outlet to control the flow of air from the heat transfer chamber through the outlet. In particular, the flow control element can move away from or rotate with respect to the outlet to open the outlet and is shaped like a spoiler to produce a downward aerodynamic force.

Patent application EP2631160A1 describes a car equipped with a rear spoiler with adjustable airfoils.

### DISCLOSURE OF THE INVENTION

The purpose of the present invention is to provide a car with increased aerodynamic load that allows high aerodynamic efficiency (i.e. an increase in downforce without a similar increase in drag).

According to the present invention, a car with increased aerodynamic load is provided in accordance with the appended claims.

The claims describe preferred embodiments of the present invention forming an integral part of the present disclosure.

### BRIEF DESCRIPTION OF THE DRAWINGS

The present invention will now be described with reference to the accompanying drawings, which illustrate in a more or less schematic and demonstrative manner a nonlimiting embodiment thereof, in which:
- Figures 1-5 are a front perspective view, a rear perspective view, a top view, a rear view, and a side view, respectively, of a car with increased aerodynamic load made in accordance with the present invention;
- Figure 6 is a view of a front hood of the car in Figures 1-5 with aerodynamic flows highlighted;
- Figure 7 is a partial view of a part of the car in Figures 1-5 arranged over a front wheelhouse and with parts removed for clarity;
- Figure 8 is a partial view of a part of the car in Figures 1-5 arranged inside a front wheelhouse and with parts removed for clarity; and
- Figure 9 is a longitudinal sectional view of a part of the car in Figures 1-5 arranged behind a rear wheelhouse and with parts removed for clarity.

### PREFERRED EMBODIMENTS OF THE INVENTION

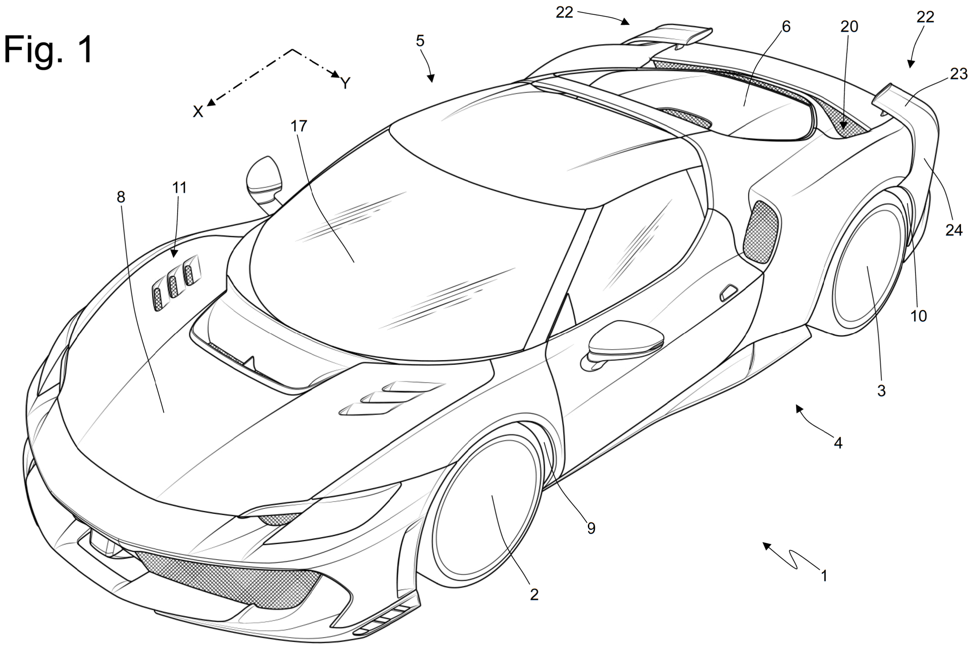

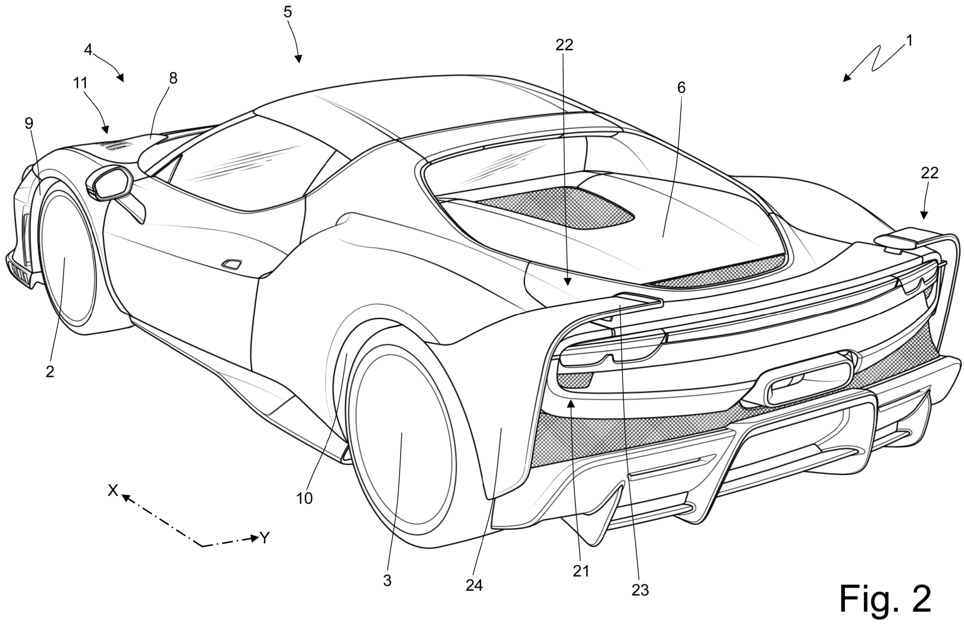

In Figures 1-5, a car is shown as a whole with reference number 1.

The car 1 travels along a longitudinal direction X that has a front-to-rear orientation and also represents the travel direction of the car 1, namely it represents the forward direction of the car 1; a transverse direction Y is defined accordingly, which is perpendicular to the longitudinal forward direction X and is oriented from right to left (or, of course, vice versa) with respect to the car 1.

The motor vehicle 1 comprises a chassis which, via respective front suspensions, supports two front steered, non-driven wheels 2, and, via respective rear suspensions, supports two rear driven wheels 3.

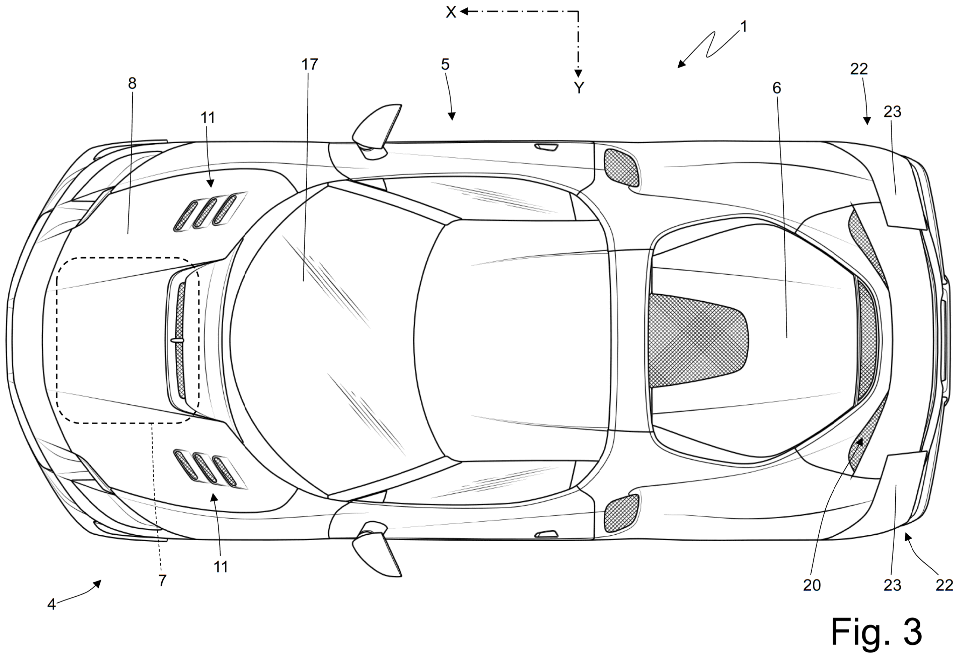

The car 1 comprises a body 4 (i.e. an outer body) that covers the chassis and defines centrally (namely between the front wheels 2 and the rear wheels 3) a cabin 5 that accommodates at least one driver's seat. The body 4 defines at the rear (i.e. behind the cabin 5) an engine compartment which is covered (closed) at the top by an openable rear hood 6 and in which (at least) an engine is arranged which transmits motion to the rear driven wheels 3; thus, the engine is arranged in a central (rear) position and the cabin 5 is arranged in front of the engine (and close to the engine). The body 4 defines at the front a luggage compartment 7 (schematically illustrated in Figure 3) which is obtained inside the body 4, is arranged in front of the cabin 5 between the front wheels 2, and is covered (closed) at the top by an openable front hood 8; the compartment 7 may also have a different intended use, i.e. it may not be used to accommodate luggage.

At each front wheel 2 and each rear wheel 3, the body 4 comprises a corresponding front wheelhouse 9 or a corresponding rear wheelhouse 10 of essentially circular shape which envelops (surrounds) at the top the front wheel 2 or the rear wheel 3; that is, each wheelhouse 9 or 10 is the part (cavity) of the body 4 of circular shape which envelops (surrounds, accommodates) a corresponding wheel 2 or 3 at the top, creating the necessary space for its movement. Each wheelhouse 9 or 10 is located inside the body, above and around the corresponding wheel 2 or 3 to protect the internal parts of the car 1 (such as, for example, the suspension and the engine) from mud, water and debris raised by the corresponding wheel 2 or 3. In this regard, it is important to note that each wheelhouse 9 or 10 is the hollow part of the body 4, which surrounds and covers the wheel 2 or 3 from the inside and is located around the wheel 2 or 3 in the vicinity of the arch formed by the wing; on the other hand, the wheel well is the physical space inside which the wheel 2 or 3 is located and allows the wheel 2 or 3 to move freely during driving (turning, steering and vertical oscillation when driving over potholes or bumps).

The car 1 also comprises a bottom wall which in use faces a road surface and which is connected to the body 4 (namely the body 4 extends upwards from the bottom wall).

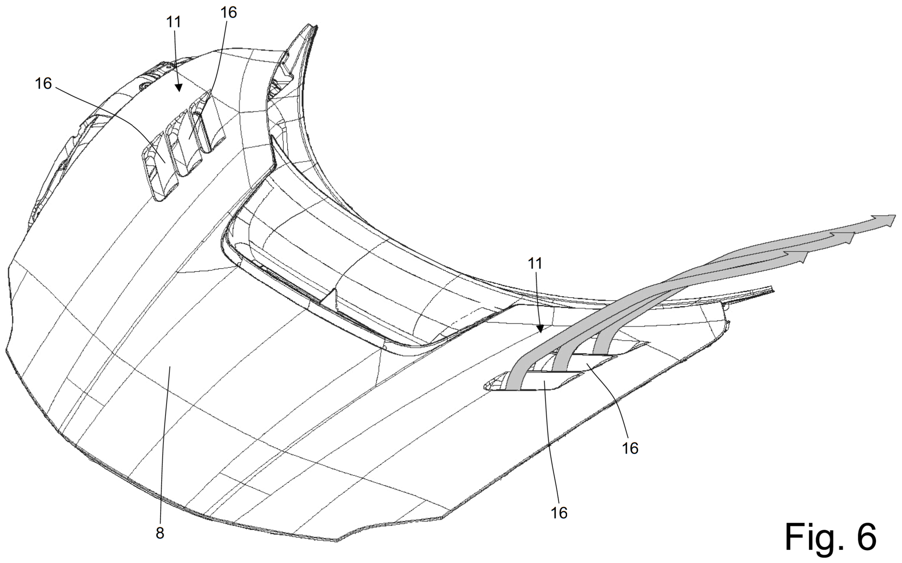

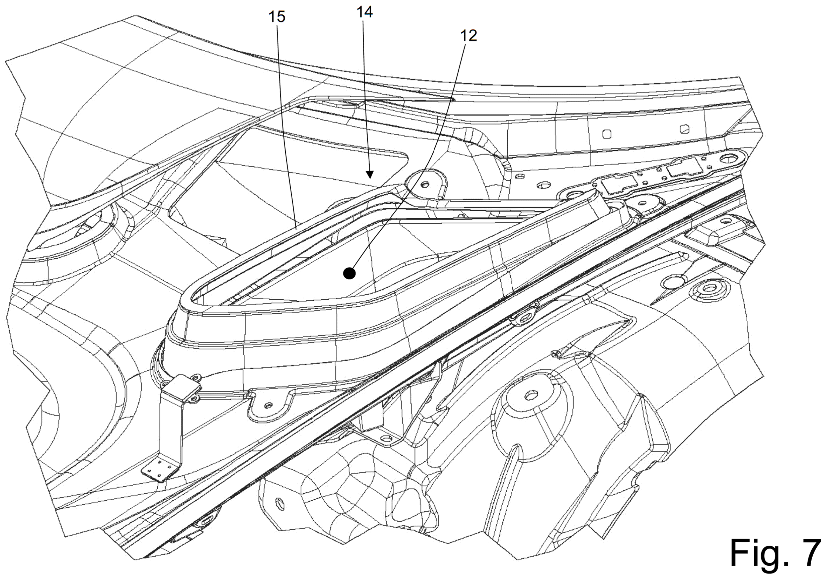

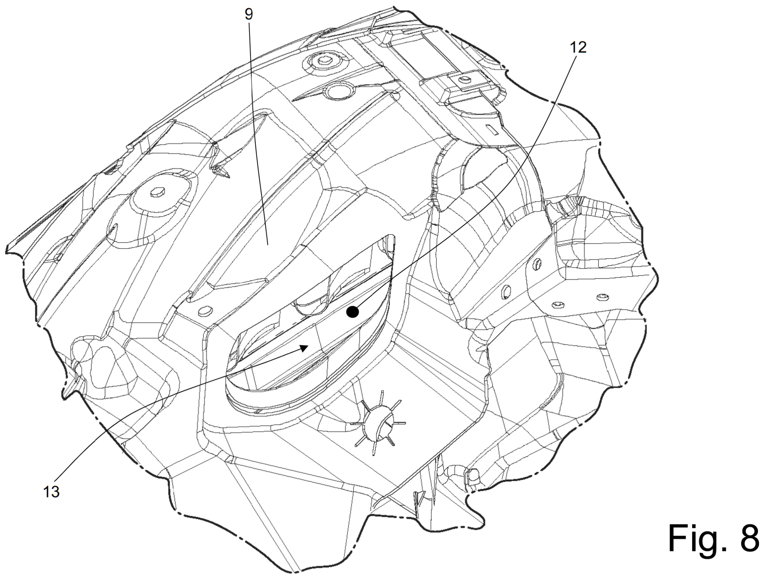

As best illustrated in Figure 6, the front openable hood 8 has a through-vent opening 11 on each side configured for the passage of air. As illustrated in Figures 7 and 8, the car 1 comprises, for each front wheelhouse 9, a duct 12 for the passage of air which originates from a through inlet opening 13 (illustrated in Figure 8) obtained through the front wheelhouse 9 (namely through the wall delimiting the front wheelhouse 9) and terminates in an outlet opening 14 (illustrated in Figure 7) which is facing and aligned with a respective outlet opening 11 of the front hood 8. In other words, each duct 12 connects the inner volume of a respective front wheelhouse 9 to a corresponding vent opening 11 of the front hood 8 so that the air in the respective front wheelhouse 9 can escape through the corresponding vent opening 11 of the front hood 8 (as illustrated in Figure 6).

According to a preferred embodiment illustrated in Figure 7, each duct 12 has an annular elastic gasket 15 which is interposed between its outlet opening 14 and the respective outlet opening 11 of the front hood 8 and is elastically compressed by the front hood 8 arranged in a closed position. In the embodiment illustrated in Figure 7, each gasket 15 is attached around the duct 12 at the outlet opening 14 (namely around the outlet opening 14); alternatively, each gasket 15 is attached to the lower wall of the front hood 8 at the outlet opening 11 (namely around the outlet opening 11).

As best illustrated in Figure 6, each vent opening 11 of the front hood 8 is provided with two sloping slats 16 that divide the vent opening 11 into three distinct zones; alternatively, each vent opening 11 of the front hood 8 is provided with only a single sloping slat 16 that divides the vent opening 11 into two distinct zones, or is provided with three or more sloping slats 16 that divide the vent opening 11 into four or more distinct zones.

According to a preferred embodiment illustrated in Figure 6, each vent opening 11 of the front hood 8 is shaped and oriented to direct the air exiting the vent opening 11 towards the rear of the body 4 and towards the outside of the body 4. In particular, each vent opening 11 of the front hood 8 is shaped and oriented to direct the air exiting the vent opening 11 more externally than a windscreen 17 that frontally delimits the cabin 5.

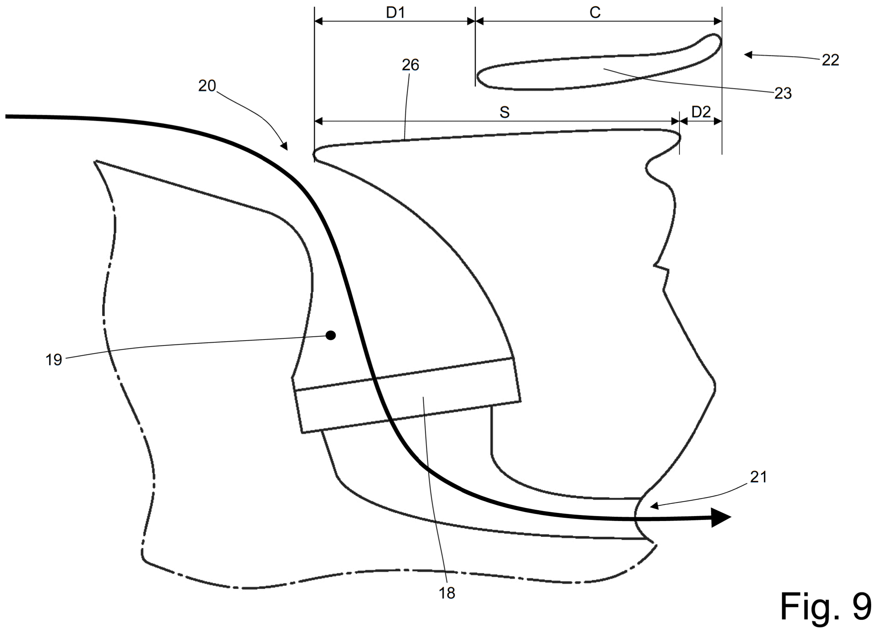

As illustrated in Figure 9, the car 1 comprises two radiators 18 (only one of which is illustrated in Figure 9), each of which is configured to be traversed by a flow of air so as to give off heat; that is, each radiator 18 is part of a cooling circuit in which a (water-based) coolant flows, which, by circulating through the radiator, gives up part of its heat to the external environment. According to a possible, but not binding, embodiment, the two cooling circuits of which the radiators 18 are part are intended for cooling the electrical components (electrical machines, control electronics, battery).

According to what is illustrated in Figure 9, the car 1 comprises two cooling ducts 19 (only one of which is illustrated in Figure 9), each of which contains within it a respective radiator 18 and extends between an inlet opening 20 which is obtained through the body 4 and faces the front and an outlet opening 21 which is obtained through the body 4 (longitudinally further back than the inlet opening 20) and faces the rear.

According to what is illustrated in Figures 1-5, the car 1 comprises two lateral aerodynamic appendages 22, each of which comprises an airfoil 23 which is shaped to generate downforce, is oriented horizontally, is located higher than the inlet opening 20 of a corresponding cooling duct 19, and is arranged at a certain distance from the rest of the body 4 so that air can also flow under the airfoil 23. In particular, the two cooling ducts 19 contain within themselves the respective radiators 18 and are arranged at the two opposite lateral side panels of the body 4; similarly, the two lateral aerodynamic appendages 22 are separate, spaced apart and independent of each other (namely they are at a certain distance from each other and have no parts in common with each other), are arranged at the two opposite lateral side panels of the bodywork 4, and are arranged above the corresponding cooling ducts 19.

Each airfoil 23 is arranged at a side panel of the body 4 behind a rear wheel 3; in addition, each airfoil 23 has a transverse extension, namely perpendicular to the longitudinal travel direction X and along the transverse direction Y, of less than 40%, and preferably less than 25%, of a maximum transverse width of the body 4. Consequently, and as mentioned above, the two airfoils 23 do not touch each other and are transversely separated by an empty space.

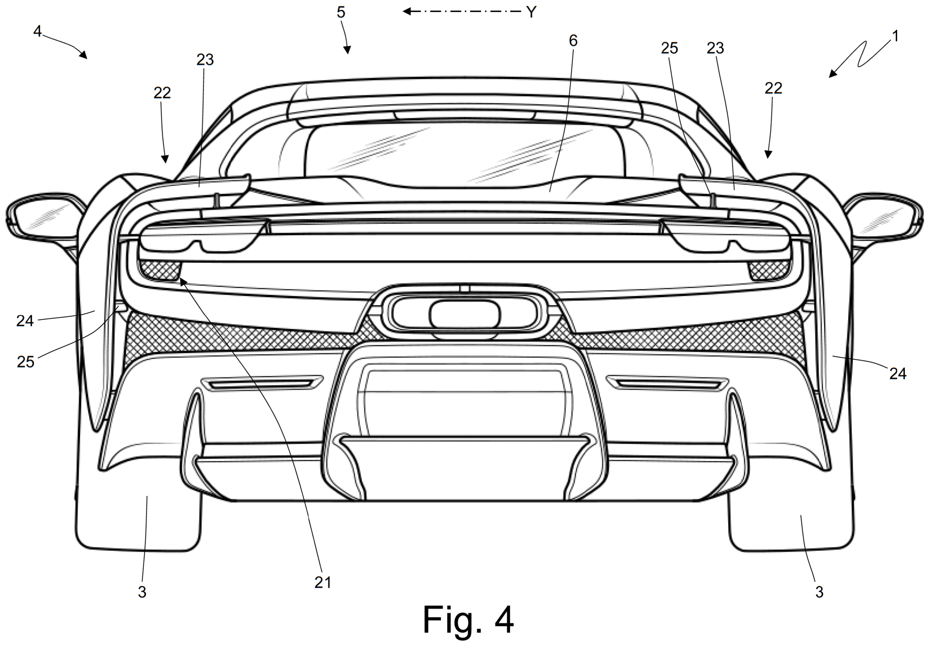

According to a preferred embodiment better illustrated in Figure 4, each lateral aerodynamic appendage 22 comprises a lateral fin (wall) 24 which is oriented vertically, protrudes from a lateral side of the body 4 and is arranged at a given distance from the rest of the body 4 so that air can also flow more internally than the lateral fin 24. Each lateral fin 24 is seamlessly joined to the respective airfoil 23, thus constituting one single monolithic body with an upside-down "L" shape with the airfoil 23; in particular, in each lateral aerodynamic appendage 22, a curved joining section without sharp edges is interposed between the airfoil 23 and the lateral fin 24.

In other words, each lateral fin 24 (which is seamlessly connected to the airfoil 23 by forming a single monolithic body with an upside-down "L" shape with the airfoil 23), has a lower end which is arranged lower than the airfoil 23 and is directly attached to the body 4, has an upper end opposite to the lower end and connected to the airfoil 23 in order to support the airfoil 23, and is at least partly arranged facing the rest of the body 4 and at a certain distance from the rest of the body 4 so as to delimit with the rest of the body 4 a channel in which air can flow.

Preferably, each lateral aerodynamic appendage 22 comprises a plurality of support columns 25 which project cantilevered from the body 4 and support the airfoil 23 and the lateral fin 24. In each lateral aerodynamic appendage 22, the support columns 25 supporting the airfoil 23 are oriented vertically while the support columns 25 supporting the lateral fin 24 are oriented horizontally.

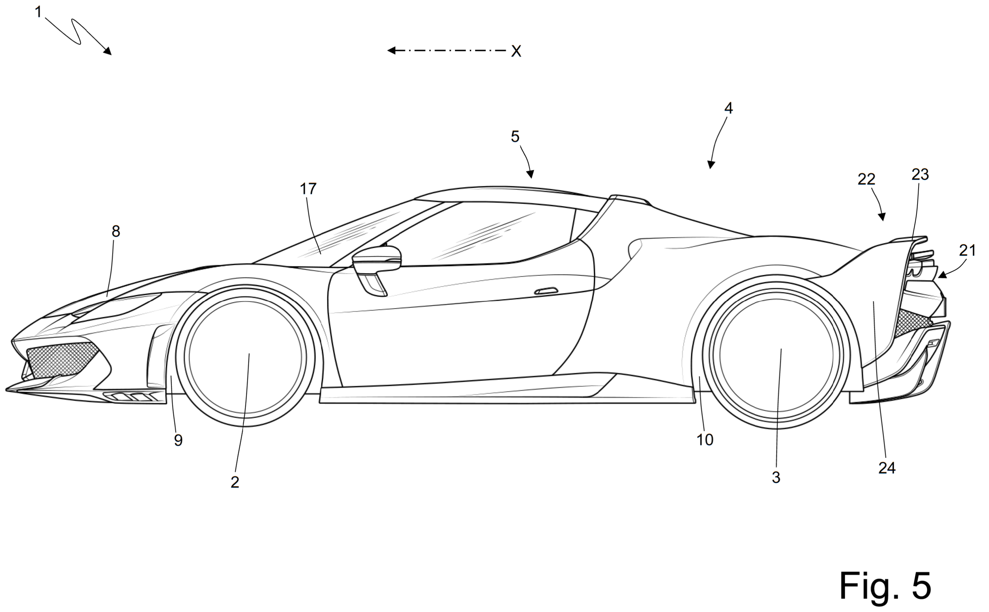

As better illustrated in Figure 5, the lower (and also front) edge of each lateral fin 24 has a substantially circular shape and is arranged at a respective rear wheelhouse 10 (namely around the wheel arch of the rear wheelhouse 10). In particular, the lower (and also front) edge of each lateral fin 24 is arranged at a rear half of a respective rear wheelhouse 10 (namely around the rear half of the wheel arch of the rear wheelhouse 10).

As illustrated in Figure 9, each cooling duct 19 extends at least partially under the airfoil 23. Each airfoil 23 is longitudinally arranged further back than the inlet opening 20 of the corresponding cooling duct 19 and is longitudinally arranged further forward than the outlet opening 21 of the corresponding cooling duct 19; in addition, each airfoil 23 is at least partially aligned longitudinally, i.e. along the longitudinal travel direction X, with the inlet opening 20 of the cooling duct 19 and with the outlet opening 21 of the respective cooling duct 19.

As illustrated in Figure 9, each airfoil 23 has a chord length C corresponding to the length of a straight line joining a leading edge of the airfoil 23 to a trailing edge of the airfoil 23. That is, the chord of each airfoil 23 is the straight line joining the leading and trailing edges of the airfoil 23 and is a fundamental geometric reference in aerodynamics for analysing the performance of the airfoil 23.

The leading edge of the airfoil 23 is located at a longitudinal distance, namely measured along the longitudinal travel direction X, from the centre of the inlet opening 20 of the cooling duct 19 of no more than the chord length C of the airfoil 23. From another, and equivalent, point of view, the leading edge of each airfoil 23 is at a longitudinal distance, namely measured along the longitudinal travel direction X, from a centre of the inlet opening 20 of the respective cooling duct 19 of no more than 25 cm, in particular no more than 20 cm and preferably no more than 15 cm. In this regard, it is important to note that if the leading edge of the airfoil 23 is at a longitudinal distance, i.e. measured along the longitudinal travel direction X, that is too high from the centre of the inlet opening 20 of the cooling duct 19 (namely greater than the chord length C of the airfoil 23 or greater than 25 cm) then the airfoil 23 has no appreciable effect on the cooling duct 19 and therefore cannot increase (appreciably) the efficiency of the cooling duct 19.

According to a possible, but not limiting, embodiment, the trailing edge of the airfoil 23 is located at a longitudinal distance, namely measured along the longitudinal travel direction X, from the centre of the outlet opening 21 of the cooling duct 19 no more than half of the chord length C of the airfoil 23. From another, and equivalent, point of view, the trailing edge of each airfoil 23 is at a longitudinal distance, i.e. measured along the longitudinal travel direction X, from the centre of the outlet opening 21 of the cooling duct 19 of no more than 15 cm and preferably no more than 10 cm.

As illustrated in Figure 9, below each airfoil 23 there is a respective demarcation panel 26 of the body 4, which starts from a rear edge of the inlet opening 20 of the cooling duct 19 and ends under the airfoil 23 to delimit, together with the airfoil 23, a channel through which air flows under the airfoil 23. In other words, each demarcation panel 26 is the part of the body 4 that begins at the rear edge of the inlet opening 20 of the respective cooling duct 19 and ends below the airfoil 23.

As mentioned above, each cooling duct 19 extends at least partially below the respective airfoil 23 and each airfoil 23 is longitudinally arranged further back than the inlet opening 20 of the respective cooling duct 19. In addition, the leading edge of each airfoil 23 is placed at a longitudinal distance D1, i.e. measured along the longitudinal direction X, from the rear edge of the inlet opening 20 of the cooling duct 19 so that the difference between the sum of the longitudinal distance D1 with the chord length C and a longitudinal length S, namely measured along the longitudinal direction X, of the demarcation panel 26 ranges from zero to the chord length C. In other words, a longitudinal distance D2, namely measured along the longitudinal direction X, defined by the following equation ranges from zero to the chord length C: $D 2 = \left(D1+C\right) - S$
D2 longitudinal distance;
D1 longitudinal distance between the leading edge of each airfoil 23 and the rear edge of the inlet opening 20;
C chord length C of each airfoil 23;
S longitudinal length S of each demarcation panel 26.

In general, the chord length C of each airfoil 23 may not be constant along the entire transverse extension of the airfoil 23 (namely along the wingspan); in the geometric considerations above, reference may be made either to the mean chord length C or to the maximum chord length C.

The embodiments described here can be combined.

The above-described car 1 has numerous advantages.

In particular, the car 1 described above has excellent aerodynamic efficiency, as the ratio of generated downforce to drag is very favourable (namely it is very high).

The high aerodynamic efficiency is also achieved thanks to the presence of the vents 11 of the front hood 8 which allow for a direct connection between each wheel well and a central part of the front hood 8 that defines the course of the wing by connecting a high pressure region (the wheel well) with a low pressure region (the side part of the front hood 8) due to the accentuated curvature of the body 4 around the front wheelhouses 9. This pressure difference promotes the extraction of air from inside the front wheelhouses 9 reducing aerodynamic blockage towards the bottom and radiators and reducing the pressure level inside the front wheelhouses 9. This has three beneficial effects on the aerodynamics: the vertical load generated is increased since the back pressure that hinders the operation of the aerodynamic devices installed on the bottom that generate vorticity and develop it in the transverse direction is reduced, aerodynamic drag is reduced, and the cooling of the internal combustion engine's radiators is improved (which can therefore be smaller, being more efficient).

In other words, the vent openings 11 obtained through the front hood 8 allow the consistent and continuous development of the air flow over the front hood 8, reducing the suction effect that is generated by the acceleration of the same air flow over the curved surface and which causes a (totally undesirable) lift effect. The air flowing through the vents 11 obtained through the front hood 8 comes from the front wheelhouses 9 which reduce their internal pressure and thus ensure less aerodynamic resistance. In addition, by properly designing the direction of the air outflow from the vents 11 of the front hood 8, it is possible to control the interaction of the hot flow exiting the vents 11 with the air flow rate that ensures the proper functioning of the radiators in the rear area of the car 1.

High aerodynamic efficiency is also achieved by the conformation of the lateral aerodynamic appendages 22 and the synergy between the lateral aerodynamic appendages 22 and the corresponding cooling ducts 19. Each lateral aerodynamic appendage 22 is divided into two parts, each of which performs a function independently of the other: the lateral fin 24 of each lateral aerodynamic appendage 22 widens the section of the rear bumper, improving the management of the incoming flow from the side and forcing a clear point for its detachment; this allows the wake to be drawn in more towards the centreline of the car 1, reducing its width and ensuring improved pressure recovery and these effects have a positive effect on the aerodynamic resistance which is directly proportional to the size of the wake and the amount of suction acting on the rear of the car 1. Instead, the airfoil 23 of each lateral aerodynamic appendage 22 contributes significantly to the generation of vertical load despite the reduced opening, also taking advantage of the "downwash" induced by the shapes of the rear wing forcing the airflow to curve over it.

The proximity of the airfoil 23 of each aerodynamic appendage 22 to the corresponding cooling duct 19, i.e. to the inlet opening 20 and outlet opening 21 of the corresponding cooling duct 19, increases the efficiency of the cooling duct 19 (and thus reduces the aerodynamic resistance introduced by the cooling duct 19 to provide the necessary heat removal from the corresponding radiator 18). Each cooling duct 19 is arranged straddling the respective airfoil 23 (namely the inlet opening 20 of the cooling duct 19 is longitudinally arranged in front of the leading edge of the airfoil 23 while the outlet opening 21 of the cooling duct 19 is longitudinally arranged behind the trailing edge of the cooling duct 19) and thus the airfoil 23 generates overpressure in front of its leading edge which increases the air inlet through the inlet opening 20 of the cooling duct 19 and generates a depression behind its trailing edge, which increases the air outlet through the outlet opening 21 of the cooling duct 19. That is, the conformation of each airfoil 23 to generate downforce (namely vertical load) promotes the deflection of air flows towards the inlet opening 20 of the corresponding cooling duct 19. In particular, each airfoil 23 improves the flow of air to the inlet opening 20 of the corresponding cooling duct 19 by both compression (overpressure) upstream of the airfoil 23 (where the inlet opening 20 of the corresponding cooling duct 19 is located), and suction (depression) downstream of the airfoil 23 (where the outlet opening 21 of the corresponding cooling duct 19 is located).

### LIST OF REFERENCE NUMBERS OF THE FIGURES

- 1: car
- 2: front wheels
- 3: rear wheels
- 4: body
- 5: cabin
- 6: rear hood
- 7: luggage compartment
- 8: front hood
- 9: front wheelhouse
- 10: rear wheelhouse
- 11: vent opening
- 12: duct
- 13: inlet opening
- 14: outlet opening
- 15: gasket
- 16: slats
- 17: windscreen
- 18: radiator
- 19: cooling duct
- 20: inlet opening
- 21: outlet opening
- 22: aerodynamic appendage
- 23: airfoil
- 24: lateral fin
- 25: support columns
- 26: demarcation panel
- X: longitudinal direction
- Y: transverse direction
- D1: longitudinal distance
- D2: longitudinal distance
- C: chord length
- S: longitudinal length

## Claims

1. A car (1) having a longitudinal travel direction (X) and comprising:
two (2) front wheels;
two rear wheels (3);
a body (4), which has two front wheelhouses (9), which surround the front wheels (2) at the top, and two rear wheelhouses (10), which surround the rear wheels (3) at the top;
a cabin (5), which is obtained inside the body (4) between the front wheels (2) and the rear wheels (3);
at least one radiator (18) configured to be crossed by an air flow so as to transfer heat;
at least one cooling duct (19), which contains the radiator (18) on the inside and extends between an inlet opening (20), which is obtained through the body (4), and an outlet opening (21), which is obtained through the body (4); and
at least one lateral aerodynamic appendage (22) comprising an airfoil (23), which is located higher than the inlet opening (20) of the cooling duct (19), is shaped so as to generate a downforce, is oriented horizontally and is arranged at a given distance from the rest of the body (4) so that the air can also flow under the airfoil (23);
wherein the airfoil (23) has a chord length (C) corresponding to the length of a straight line joining a leading edge of the airfoil (23) to a trailing edge of the airfoil (23); and
wherein under the airfoil (23) there is a demarcation panel (26) of the body (4), which starts from a rear edge of the inlet opening (20) of the cooling duct (19) and ends under the airfoil (23) to delimit, together with the airfoil (23), a channel through which air flows under the airfoil (23);
wherein the cooling duct (19) at least partly extends under the airfoil (23); and
wherein the airfoil (23) is longitudinally arranged further back than the inlet opening (20) of the cooling duct (19); and
the car (1) is **characterised in that** the leading edge of the airfoil (23) is arranged at a first longitudinal distance (D1), namely measured along the longitudinal direction (X), from the rear edge of the inlet opening (20) of the cooling duct (19) so that the difference between the sum of the first longitudinal distance (D1) with the chord length (C) and a longitudinal length (S), namely measured along the longitudinal direction (X), of the demarcation panel (26) ranges from zero to the chord length (C).

2. The car (1) according to claim 1, wherein a second longitudinal distance (D2), namely measured along the longitudinal direction (X), defined by the following equation ranges from zero to the chord length (C): $D 2 = \left(D1+C\right) - S$
D2 second longitudinal distance;
D1 first longitudinal distance between the leading edge of the airfoil (23) and the rear edge of the inlet opening (20);
C chord length (C) of the airfoil (23);
S longitudinal length (S) of the demarcation panel (26).

3. The car (1) according to claim 1 or 2, wherein the leading edge of the airfoil (23) is located at a longitudinal distance, namely measured along the longitudinal travel direction (X), from a centre of the inlet opening (20) of the cooling duct (19) of no more than 25 cm, in particular no more than 20 cm and preferably no more than 15 cm.

4. The car (1) according to claim 1, 2 or 3, wherein the leading edge of the airfoil (23) is located at a longitudinal distance, namely measured along the longitudinal travel direction (X), from a centre of the inlet opening (20) of the cooling duct (19) of no more than the chord length (C) of the airfoil (23).

5. The car (1) according to any one of claims 1 to 4, wherein the airfoil (23) is at least partially longitudinally aligned, namely along the longitudinal travel direction (X), with the inlet opening (20) of the cooling duct (19) and with the outlet opening (21) of the cooling duct (19).

6. The car (1) according to any one of claims 1 to 5, wherein the airfoil (23) is longitudinally arranged further forward than the outlet opening (21) of the cooling duct (19).

7. The car (1) according to claim 6, wherein a trailing edge of the airfoil (23) is located at a longitudinal distance, namely measured along the longitudinal travel direction (X), from the centre of the outlet opening (21) of the cooling duct (19) of no more than 15 cm and preferably no more than 10 cm.

8. The car (1) according to claim 6 or 7, wherein a trailing edge of the airfoil (23) is located at a longitudinal distance, namely measured along the longitudinal travel direction (X), from the centre of the outlet opening (21) of the cooling duct (19) of no more than half of the chord length (C) of the airfoil (23).

9. The car (1) according to any one of claims 1 to 8, wherein the airfoil (23) is arranged in the area of a lateral side of the body (4) behind a rear wheel (3).

10. The car (1) according to any one of claims 1 to 9, wherein the airfoil (23) has a transverse extension, namely perpendicular to the longitudinal travel direction (X), of less than 40%, preferably less than 25%, of a maximum transverse width of the body (4).

11. The car (1) according to any one of claims 1 to 10, wherein the cooling duct (19) is arranged astride the airfoil (23) and, therefore, the inlet opening (20) of the cooling duct (19) is longitudinally arranged in front of a leading edge of the airfoil (23), whereas the outlet opening (21) of the cooling duct (19) is longitudinally arranged behind a trailing edge of the airfoil (23).

12. The car (1) according to one of claims 1 to 11 and comprising:
two radiators (18);
two cooling ducts (19), which contain the respective radiators (18) on the inside and are arranged on the area of the two opposite lateral sides of the body (4); and
two lateral aerodynamic appendages (22), which are separate from and independent of one another, are arranged in the area of the two opposite lateral sides of the body (4) and are arranged above the corresponding cooling ducts (19) .

13. The car (1) according to any one of claims 1 to 12, wherein the lateral aerodynamic appendage (22) comprises a lateral fin (24) which is oriented vertically, is seamlessly joined to the airfoil (23), thus constituting one single monolithic body with an upside-down "L" shape with the airfoil (23), has a lower end arranged lower than the airfoil (23) and is directly attached to the body (4), has an upper end opposite to the lower end and connected to the airfoil (23) in order to support the airfoil (23), and is at least partially arranged facing the rest of the body (4) and at a certain distance from the rest of the body (4) so as to delimit with the rest of the body (4) a channel in which air can flow.

14. The car (1) according to claim 13, wherein a curved joining section without sharp edges is interposed between the airfoil (23) and the lateral fin (24).

15. The car (1) according to claim 13 or 14, wherein the lateral aerodynamic appendage (22) comprises a plurality of support columns (25), which project cantilevered from the body (4) and support the airfoil (23) and the lateral fin (24).

16. The car (1) according to claim 13, 14 or 15, wherein the lower edge of the lateral fin (24) has a substantially circular shape and is arranged around a wheel arch of a rear wheelhouse (10).

17. The car (1) having a longitudinal travel direction (X) and comprising:
two (2) front wheels;
two rear wheels (3);
a body (4), which has two front wheelhouses (9), which surround the front wheels (2) at the top, and two rear wheelhouses (10), which surround the rear wheels (3) at the top;
a cabin (5), which is obtained inside the body (4) between the front wheels (2) and the rear wheels (3); and
two lateral aerodynamic appendages (22), which are separate from and independent of one another, are arranged on the two opposite lateral sides of the body (4) behind the rear wheels (3) and each comprise an airfoil (23), which is oriented horizontally and is arranged at a given distance from the rest of the body (4) so that air can also flow under the airfoil (23);
the car (1) is **characterised in that** each lateral aerodynamic appendage (22) comprises a lateral fin (24) which is oriented vertically, is seamlessly joined to the airfoil (23), thus constituting one single monolithic body with an upside-down "L" shape with the airfoil (23), has a lower end which is arranged lower than the airfoil (23) and is directly attached to the body (4), has an upper end opposite to the lower end and connected to the airfoil (23) in order to support the airfoil (23), and is at least partly arranged facing the rest of the body (4) and at a certain distance from the rest of the body (4) so as to delimit with the rest of the body (4) a channel in which air can flow.

18. The car (1) according to claim 16, wherein the lower edge of each lateral fin (24) has a substantially circular shape and is arranged around a wheel arch of a rear wheelhouse (10).
